# EUROPÄISCHE PATENTSCHRIFT

(11) **EP 2 229 543 B1**
(45) Veröffentlichungstag und Bekanntmachung des Hinweises auf die Patenterteilung: **29.06.2011**
(21) Anmeldenummer: 08869251.2
(22) Anmeldetag: 05.12.2008
(51) Int. Cl.: F16D 65/12

(54) **RADBREMSSCHEIBE FÜR EIN RAD EINES FAHRZEUGS**
WHEEL BRAKE DISC FOR A WHEEL OF A VEHICLE
DISQUE DE FREIN À ROUE POUR UNE ROUE DE VÉHICULE

(30) Priorität: 08.01.2008 DE 102008003873
(43) Veröffentlichungstag der Anmeldung: 22.09.2010
(73) Patentinhaber: Siemens Aktiengesellschaft, 80333 München (DE)
(72) Erfinder: ZENZ, Rüdiger, A-8020 Graz (AT)
(86) Internationale Anmeldenummer: PCT/EP2008/066894
(87) Internationale Veröffentlichungsnummer: WO 2009/087001

(56) Entgegenhaltungen:
- EP-A- 0 683 331
- DE-A1- 2 941 700
- DE-A1- 3 839 073
- DE-B- 1 258 444
- GB-A- 1 239 851

## Beschreibung

Die Erfindung bezieht sich auf eine Radbremsscheibe für ein Rad eines Fahrzeugs, mit beidseitig des Rades anordbaren Reibringen, und mit Verbindungsmitteln zum Befestigen der Reibringe am Rad, die zum Durchgreifen von Bohrungen in den Reibringen und/oder Bohrungen im Rad eingerichtet sind und Spannelementen zum Verspannen der Reibringe am Rad sowie Zentriermittel zum Zentrieren der Reibringe am Rad aufweisen, wobei die Zentriermittel stiftförmig ausgebildet sind und an ihren beiden freien Enden jeweils ein Führungselement angeordnet ist, welches radial beweglich am Reibring geführt ist, wobei die Spannelemente und die Zentriermittel voneinander getrennt in unterschiedlichen Bohrungen angeordnet sind.

Die EP 0 683 331 B1 (D1) offenbart eine Radbremsscheibe mit beidseitig eines Schienenrades angeordneten Reibringen, die über stiftförmige Verbindungsmittel fest mit dem Schienenrad verspannt sind. Dabei durchragen die stiftförmigen Verbindungsmittel eine Durchgangsöffnung des Rades mit Spiel, so dass ein thermisches Atmen der Radbremsscheibe im Bremsfall ermöglicht ist. Ferner sind Zentriermittel vorgesehen, welche Unwuchten beim besagten thermischen Atmen vermeiden. Die Zentriermittel und die Befestigungs- oder Verbindungsmittel sind in unterschiedlichen Bohrungen und somit getrennt voneinander angeordnet. Dabei weisen die Zentriermittel die Gestalt eines Doppelgleitsteins auf, der sich beidseitig des Schienenrades erstreckt und in radial verlaufenden Nuten des jeweiligen Reibrings angeordnet ist.

In der DE 32 40 636 C2 ist eine Radbremsscheibe beschrieben, die zwei beidseitig eines Radsteges angeordnete Reibringe aufweist, wobei das Rad und die Reibringe zueinander fluchtenden Bohrungen aufweisen. In den Bohrungen sind Verbindungsmittel angeordnet, welche sowohl ein Verspannen als auch ein Zentrieren der Reibringe am Rad ermöglichen. Die Verbindungsmittel bestehen jeweils aus einer Spannhülse, welche an ihren freien Enden jeweils von einem als Führungselement ausgebildeten Gleitstein umfasst ist, der in einer am Reibring verlaufenden Nut radial beweglich geführt ist. Der Gleitstein ist mit einer zentralen Bohrung versehen, welche von einer die Spannhülse und die Gleitsteine mit Spiel durchgreifenden, die Reibringe beidseitig mit dem Rad verspannende Schraube durchsetzt ist. Die während eines Abbremsvorgangs von den Reibringen über den Gleitstein auf das Rad übertragenen Kräfte wirken auf diesen sowohl in axialer als auch in tangentialer Richtung ein. Diese ungünstige Belastung kann zu einem Bruch des Gleitsteins führen.

Aufgabe der Erfindung ist es eine Radbremsscheibe der eingangs genannten Art anzugeben, welche einfach montierbar ist.

Die Aufgabe wird erfindungsgemäß dadurch gelöst, dass das stiftförmige Zentriermittel eine hohle Spannhülse ist.

Die Bremskraft-Einleitung in das Rad erfolgt somit reibschlüssig mittels der Spannelemente und formschlüssig mittels der Zentriermittel in voneinander beabstandeten und dem jeweiligen Kraftschluss angepassten Bereichen. Die in zueinander fluchtenden Bohrungen des Rades und der Reibringe geführten Spannelemente weisen zu den Bohrungen ein Spiel auf. Dabei pressen die Spannelemente die Reibringe mit ihren entsprechend ihrer Oberflächen-Ausgestaltung am Rad anliegenden Kontaktflächen an das Rad, so dass über diese Kontaktflächen reibschlüssig eine Bremskraft in das Rad einleitbar ist. Die Reibkräfte und die Anpresskräfte wirken dabei im Wesentlichen nicht auf die Zentriermittel und den diese umgebenden Bereich ein. Die Spannelemente sind fest mit den Reibringen verbunden und bewegen sich während eines Abbremsvorganges durch das Erwärmen der Reibringe mit den sich ausdehnenden Reibringen in radialer Richtung mit. Um Spannungen in den Reibringen zu vermeiden, durchgreifen die Spannmittel die Bohrungen des Rades mit einem ausreichenden Spiel.

Mittels der Zentriermittel wird eine Bremskraft-Einleitung in das Rad durch Formschluss ermöglicht. Hierbei wird eine Unwucht des sich drehenden Rades aufgrund der sich ausdehnenden und zusammenziehenden Reibringe vermieden. Hierzu sind die Reibringe mittels der Zentriermittel radial entlang des Rades geführt, so dass ein Ausdehnen oder Zusammenziehen der Reibringe dessen Mittelpunkt nicht verschiebt. Die stiftförmigen Zentriermittel sind fest am Rad angeordnet und in einer axial verlaufenden Bohrung des Rades beidseitig überstehend befestigt. Entlang der an den überstehenden Enden der stiftförmigen Zentriermittel angeordneten Führungselemente ist ein Gleiten der Reibringe relativ zum Rad ermöglicht. Hierzu können beispielsweise Vorsprünge am Reibring angeordnet sein, die an ihrer dem Rad zugewandten Stirnseite eine radial verlaufende Nut aufweisen, in welche eines der Führungselemente passgenau und in radialer Richtung verschiebbar eingreift. Erfindungsgemäß sind weder das Führungselement noch der eine Nut aufweisende Vorsprung durch die mittels der Spannelemente hervorgerufenen Kräfte wesentlich beaufschlagt.

Beim Einleiten einer Bremskraft in die Reibringe wird formschlüssig über die Zentriermittel eine Bremskraft auf das Rad übertragen, welche tangential zur Bewegungsrichtung an den Enden der stiftförmigen Zentriermittel angreift. Da erfindungsgemäß auf die Zentriermittel keine weiteren Kräfte ein-wirken, müssen sowohl die Zentriermittel selbst als auch deren Befestigung am Rad nur besonders stabil in Bezug auf eine Krafteinwirkung senkrecht zur Achse des stiftförmigen Zentriermittels ausgelegt sein.

Erfindungsgemäß sind die stiftförmigen Zentriermittel als hohle Spannhülse ausgestattet.

Die Spannhülse kann beispielsweise eine Schwerspannhülse sein. Derartige Spannhülsen ermöglichen eine Befestigung in der Rad-Bohrung, welche gegenüber den tangential einwirkenden Kräften aufgrund der Rückstellkräfte der Spannhülse besonders stabil sind. Durch die Hohlform der Spannhülse weist diese zudem kein unnötiges Gewicht auf. Auch die Befestigung der Radscheiben an dem Rad ist vereinfacht.

Weiter kann es vorteilhaft vorgesehen sein, dass das Führungselement das eine Ende des stiftförmigen Zentriermittels umfasst.

Das Führungselement kann beispielsweise auf das Ende des stiftförmigen Zentriermittels mittels einer formkomplementären, nicht durchgängigen Bohrung aufgesetzt sein, so dass das Ende des Zentriermittels in die Bohrung des Führungselementes hineinragt. Eine derartige Verbindung ist durch die Überlappung von Zentriermittel und Führungselement gegenüber senkrecht zur Achse des Zentriermittels angreifenden Kräften besonders stabil.

Weiter kann vorteilhaft vorgesehen sein, dass das Führungselement ein Gleitstein ist.

Da der Reibring sich vorzugsweise dann ausdehnt, und somit am Führungselement entlang gleitet, wenn durch das Abbremsen der Reibring tangential an das Führungselement gepresst wird, treten hohe Reibungskräfte an der Oberfläche des Führungselements auf. Das Material des Gleitsteins ist dieser Beanspruchung des Führungselements besonders gut angepasst.

Eine weitere vorteilhafte Ausgestaltung der Erfindung kann vorsehen, dass das Führungselement in einer am Reibring angeordneten radial verlaufenden Nut beweglich geführt ist.

Die radial verlaufende Nut kann innerhalb der mit dem Rad in Kontakt bringbaren Bereiche des Reibringes verlaufen. Die Länge der Nut entspricht mindestens der maximal zu erwartenden Ausdehnung des Reibringes in radialer Richtung. Zu jedem Zentriermittel ist eine entsprechende Nut gegenüberliegend am Reibring vorgesehen. Über die Seitenwände der Nut ist formschlüssig ein Einleiten von Bremskräften in das in der Nut geführte Zentriermittel ermöglicht, wobei das Zentriermittel im Wesentlichen ohne Spiel quer zur Nut in dieser geführt ist. Die radial bewegliche Führung lässt sich mittels einer Nut auf besonders einfache und preiswerte Art realisieren. Die Nut könnte aber auch am Führungselement angeordnet sein, so dass eine radiale Führung durch einen mit der Nut korrespondierenden, radial am Reibring verlaufenden stegförmigen Vorsprung bewirkt ist.

Vorteilhafterweise kann weiter vorgesehen sein, dass das Führungselement radial beweglich entlang eines am Reibring angeordneten Gleitsteins geführt ist.

Das einander berührende Führungselement und das seiner Führung dienende am Reibring angeordneter Gegenstück, welches ein Teil des Reibringes sein kann, sind untereinander hohen Reibungskräften ausgesetzt, wobei sich ein Verschleiß der Oberflächen negativ auf die radiale Ausrichtung der Führung auswirkt. Ist die Führung eines Führungselements durch einen am Reibring angeordneten Gleitstein bewirkt, wirkt das Material des Gleitsteins einem solchen Verschleiß entgegen. Das Führungselement kann ebenfalls aus einem Gleitstein bestehen.

Weiter kann vorteilhaft vorgesehen sein, dass die Spannelemente und die Zentriermittel auf einem Kreisbogen eines Kreises angeordnet sind.

Den Mittelpunkt des besagten Kreises bildet die Rachachse aus.

Es kann auch als vorteilhaft angesehen werden, dass mindestens drei Zentriermittel gleichmäßig verteilt entlang eines Kreises angeordnet sind.

Vorteilhafter Weise kann weiter vorgesehen sein, dass an den Reibringen Befestigungs-Vorsprünge angeordnet sind, durch welche Bohrungen zur Aufnahme der Spannelemente verlaufen, und von den Befestigungs-Vorsprüngen beabstandet Zentrier-Vorsprünge angeordnet sind, welche zur radial beweglichen Führung der Führungselemente ausgebildet sind.

Die Reibringe weisen einen Abstand zum Rad auf und werden mit den Stirnseiten der Befestigungs-Vorsprünge und den Stirnseiten der Zentrier-Vorsprünge am Rad anliegend mit diesem verspannt. Dies ermöglicht eine Kühlung der Reibringe, indem Luft zwischen Rad und Reibring zirkulieren kann. Zusätzlich können Kühlrippen am Reibring angeordnet sein, welche in den Zwischenraum hineinragen.

Weitere zweckmäßige Ausgestaltungen und Vorteile der Erfindung sind Gegenstand der Beschreibung von Ausführungsbeispielen der Erfindung unter Bezug auf die Figur der Zeichnung, wobei gleiche Bezugszeichen auf gleich wirkende Bauteile verweisen.

Dabei zeigt
- Figur 1: eine schematische Darstellung eines Ausfüh- rungsbeispiels einer erfindungsgemäßen Rad- bremsscheibe in Seitenansicht, und
- Figur 2: eine entlang der Linie A - A quer geschnittene Ansicht der in Figur 1 dargestellten Radbrems- scheibe in schematischer Darstellung, und
- Fig. 3: einen Ausschnitt einer entlang der Linie B - B quer geschnittenen Ansicht der in Figur 1 dar- gestellten Radbremsscheibe in schematischer Darstellung.

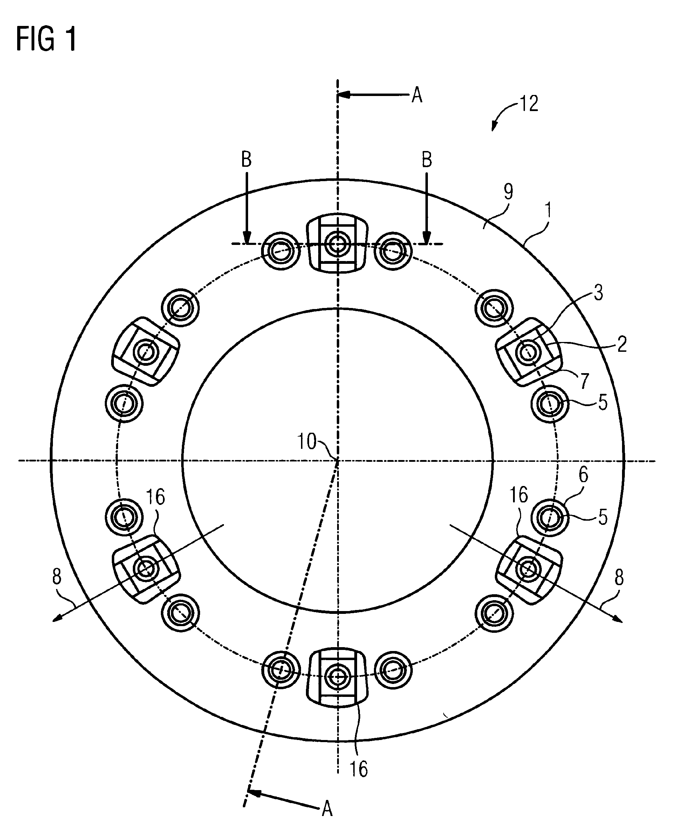

Die Figur 1 zeigt in schematischer Darstellung die erfindungsgemäße Radbremsscheibe 12 in einer Seitenansicht, wobei in dieser Ansicht eine Reibringseite 9 eines Reibringes 1 erkennbar ist. Durch die Reibringe 1 der Radbremsscheibe 12 verlaufen in einer axialen Richtung Bohrungen 6, welche auf einem figürlich angedeuteten Kreis angeordnet sind. Der Mittelpunkt des Kreises ist di Rachachse 10. Die Bohrungen 6 sind von Spannelementen 5 durchsetzt, welche der Befestigung der Radbremsscheibe 12 dienen. Die von den Spannelementen 5 durchsetzten Bohrungen 6 sind paarweise angeordnet, wobei jeweils zwischen den paarweise angeordneten Bohrungen ein stiftförmiges Zentriermittel 3 radial beweglich am Reibring 1 geführt ist. Die radiale Richtung ist in Figur 1 mit dem Pfeil 8 verdeutlicht. Die stiftförmigen Zentriermittel 3 sind in Figur 1 innerhalb eines Ausbruchs 16 der Seitenansicht im Querschnitt dargestellt. Die Bohrungen 6 mit den Spannelementen 5 und die Zentriermittel 3 können aber auch auf andere Weise entlang des Reibringes 1 angeordnet sein. Wesentlich bei der Anordnung der am Reibring 1 geführten Zentriermittel 3 ist, dass sich der auf der Radachse 10 angeordnete Mittelpunkt des Reibringes 1 nicht verschiebt und ein Ausdehnen und Zusammenziehen des Reibringes 1 relativ zu den Zentriermitteln 3 durch die Führung in der radialen Richtung 8 ermöglicht ist. Bereits drei gleichmäßig entlang des Kreises angeordnete Zentriermittel 3 sind hierzu ausreichend. Die stiftförmigen Zentriermittel 3 sind mit ihrem einen Ende an einer der Reibringseite 9 gegenüberliegenden Reibringseite entlang radial beweglich geführt. Das Ende des Zentriermittels 3 ist hierzu von einem Gleitstein 2 umfasst, welcher in einer in radialer Richtung verlaufenden Nut 7 des Reibringes 1 geführt ist. Die Führung des stiftförmigen Zentriermittels 3 könnte auch auf andere Art realisiert sein. Beispielsweise könnte der Querschnitt des in der Nut 7 angeordneten Gleitsteins 2 nicht wie in dem Ausbruch 16 der Seitenansicht dargestellt quadratisch, sondern rund sein. Wesentlich hierbei ist nur, dass die Bewegung des Zentriermittels 3 durch die Führung auf die radiale Richtung 8 eingeschränkt ist.

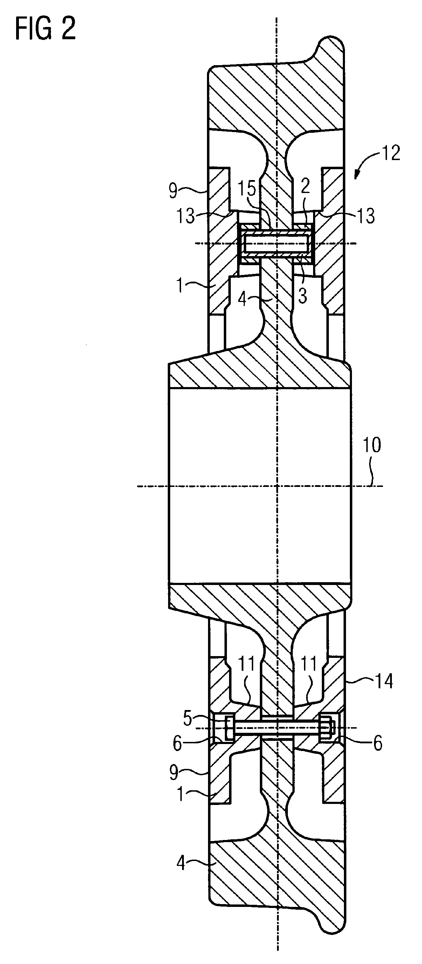

Die Figur 2 zeigt eine Radbremsscheibe 12 mit zwei Reibringen 1,14, die beidseitig eines Rades 4 angeordnet sind. Die Reibringe weisen an einer ihrer beiden Reibringseiten Befestigungs-Vorsprünge 11 und Zentrier-Vorsprünge 13 auf, mit denen die Reibringe 1, 14 beidseitig des Rades 4 an dem Rad 4 anliegen. Durch die Befestigung-Vorsprünge 11 und das Rad 4 verlaufen zueinander fluchtende Bohrungen 6, die von Spannelementen 5 durchsetzt sind. Die Spannelemente 5 dienen der Verspannung der Reibringe mit dem Rad 4, so dass bei einem Abbremsvorgang die auf die Reibringe 1,14 wirkende Bremskraft über die Stirnseiten der Befestigungs- Vorsprünge 11 reibschlüssig auf das Rad 4 übertragbar ist. Hierbei erwärmen sich die Reibringe, so dass diese sich in radialer Richtung ausdehnen. Die Spannelemente 5 in den Bohrungen 6 bewegen sich dabei mit den Reibringen 1, 14 mit. Um Spannungen in den Reibringen zu vermeiden, weisen die Spannelemente 5 deshalb zu den Bohrungen 6 im Rad ein ausreichendes Spiel auf. Damit an dem Rad 4 durch sich ungleichmäßig ausdehnende Reibringe 1, 14 keine Unwucht entsteht, sind gegenüberliegend der Zentrier-Vorsprünge 13 am Rad 4 stiftförmige Zentriermittel 3 angeordnet, welche in axialer Richtung das Rad in einer Bohrung 15 durchgreifen und mit ihren beiden aus den Bohrungen 15 ragenden Enden radial beweglich an den Vorsprüngen 13 geführt sind. Bei geeigneter Verteilung der Zentriermittel 3 entlang des Radtellers ist damit gewährleistet, dass sich der Mittelpunkt der Reibringe relativ zur Radachse 10 nicht verschieben kann. Die Befestigungs-Vorsprünge 11 und die Zentrier-Vorsprünge 13 bewirken, dass Luft zwischen den Reibringen und dem Rad 4 zur Kühlung zirkulieren kann. Die Vorsprünge sind aber nicht erfindungswesentlich und könnten auch weggelassen werden.

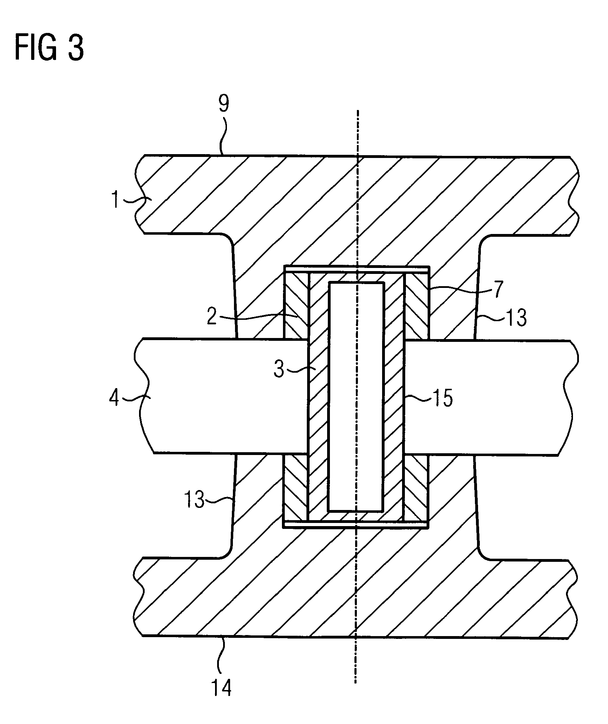

Die Figur 3 zeigt eine Detailansicht der Radbremsscheibe 12 im Bereich der an den Reibringen 1 und 14 angeordneten Zentrier-Vorsprünge 13, an denen ein stiftförmiges Zentriermittel 3 radial beweglich geführt ist. Das in der Figur 3 dargestellte stiftförmige Zentriermittel 3 ist eine Spannhülse 3, welche in einer Bohrung 15 des Rades 4 eingespannt ist und beidseitig aus der Bohrung 15 herausragt. Die beiden freien Enden sind von Gleitsteinen 2 umfasst, welche in eine Nut 7 der Zentrier-Vorsprünge 13 eingepasst sind, so dass die Gleitsteine 2 an den Seitenwänden der Nut 7 anliegend entlang der Nut 7 gleiten können. Die Nut 7 verläuft in radialer Richtung, so dass die Reibringe 1, 14 an dem Rad 4 ohne ihren Mittelpunkt zu verschieben sich ausdehnen können. Während eines Abbremsvorganges werden die Reibringe 1, 14 abgebremst, so dass über die Seitenwände der Nuten 7 und die fest in die Bohrungen 15 eingespannten Spannhülsen 3 formschlüssig eine Bremskraft auf das Rad 4 übertragbar ist.

### Bezugszeichenliste

- 1: Reibring
- 2: Gleitstein
- 3: stiftförmiges Zentriermittel in Form einer Spannhülse
- 4: Rad
- 5: Spannelement
- 6: Bohrung im Reibring oder im Rad
- 7: Nut
- 8: radiale Richtung
- 9: Reibringseite
- 10: Rachachse
- 11: Befestigungs-Vorsprung
- 12: Radbremsscheibe
- 13: Zentrier-Vorsprung
- 14: Reibring
- 15: Bohrung im Rad
- 16: Ausbruch

## Patentansprüche

1. Radbremsscheibe (12) für ein Rad (4) eines Fahrzeugs, mit
- beidseitig des Rades (4) anordbaren Reibringen (1),
- und mit Verbindungsmitteln zum Befestigen der Reibringe (1) am Rad (4), die zum Durchgreifen von Bohrungen (6) in den Reibringen (1) und/oder Bohrungen (15) im Rad (4) eingerichtet sind und Spannelementen (5) zum Verspannen der Reibringe (1) am Rad (4) sowie Zentriermittel (3) zum Zentrieren der Reibringe (1) am Rad aufweisen, wobei die Zentriermittel (3) stiftförmig ausgebildet sind und an ihren beiden freien Enden jeweils ein Führungselement (2) angeordnet ist, welches radial beweglich am Reibring (1) geführt ist, wobei
- die Spannelemente (5) und die Zentriermittel (3) voneinander getrennt in unterschiedlichen Bohrungen (6, 15) angeordnet sind,
**dadurch gekennzeichnet, dass** das stiftförmige Zentriermittel eine hohle Spannhülse (3) ist.

2. Radbremsscheibe nach Anspruch 1,
**dadurch gekennzeichnet, dass** das Führungselement (2) das eine Ende des stiftförmigen Zentriermittels umfasst.

3. Radbremsscheibe (12) nach einem der Ansprüche 1 bis 2,
**dadurch gekennzeichnet, dass** das Führungselement ein Gleitstein (2) ist.

4. Radbremsscheibe (12) nach einem der vorstehenden Ansprüche,
**dadurch gekennzeichnet, dass** das Führungselement (2) in einer am Reibring angeordneten radial verlaufenden Nut (7) beweglich geführt ist.

5. Radbremsscheibe (12) nach einem der vorstehenden Ansprüche,
**dadurch gekennzeichnet, dass** das Führungselement radial beweglich entlang eines am Reibring angeordneten Gleitsteins geführt ist.

6. Radbremsscheibe (12) nach einem der vorstehenden Ansprüche,
**dadurch gekennzeichnet, dass** die Spannelemente (5) und die Zentriermittel (3) auf einem Kreisbogen eines Kreises angeordnet sind.

7. Radbremsscheibe (12) nach einem der vorstehenden Ansprüche,
**dadurch gekennzeichnet, dass** mindestens drei Zentriermittel (3) gleichmäßig verteilt entlang eines Kreises angeordnet sind.

8. Radbremsscheibe (12) nach einem der vorstehenden Ansprüche,
**dadurch gekennzeichnet, dass** an dem Reibring (1) Befestigungs-Vorsprünge (11) angeordnet sind, durch welche Bohrungen (6) zur Aufnahme der Spannelemente (5) verlaufen, und von den Befestigungs-Vorsprüngen (11) beabstandet Zentrier-Vorsprünge (13) angeordnet sind, welche zur radial beweglichen Führung der Führungselemente (2) ausgebildet sind.

## Claims

1. Wheel brake disc (12) for a wheel (4) of a vehicle, having
- friction rings (1) which can be arranged on both sides of the wheel (4),
- and having connecting means for fastening the friction rings (1) to the wheel (4), which connecting means are set up for engaging through holes (6) in the friction rings (1) and/or holes (15) in the wheel (4), and have clamping elements (5) for clamping the friction rings (1) on the wheel (4) and centring means (3) for centring the friction rings (1) on the wheel, the centring means (3) being of pin-shaped configuration and in each case one guide element (2) which is guided radially movably on the friction ring (1) being arranged at their two free ends,
- the clamping elements (5) and the centring means (3) being arranged separately from one another in different holes (6, 15),
**characterized in that** the pin-shaped centring means is a hollow clamping sleeve (3).

2. Wheel brake disc according to Claim 1, **characterized in that** the guide element (2) comprises one end of the pin-shaped centring means.

3. Wheel brake disc (12) according to either of Claims 1 and 2, **characterized in that** the guide element is a sliding block (2).

4. Wheel brake disc (12) according to one of the preceding claims, **characterized in that** the guide element (2) is guided movably in a radially extending groove (7) which is arranged on the friction ring.

5. Wheel brake disc (12) according to one of the preceding claims, **characterized in that** the guide element is guided radially movably along a sliding block which is arranged on the friction ring.

6. Wheel brake disc (12) according to one of the preceding claims, **characterized in that** the clamping elements (5) and the centring means (3) are arranged on an arc of a circle.

7. Wheel brake disc (12) according to one of the preceding claims, **characterized in that** at least three centring means (3) are arranged such that they are distributed uniformly along a circle.

8. Wheel brake disc (12) according to one of the preceding claims, **characterized in that** fastening projections (11) are arranged on the friction ring (1), through which fastening projections (11) holes (6) extend for receiving the clamping elements (5), and centring projections (13) which are configured for the radially movable guidance of the guide elements (2) are arranged such that they are spaced apart from the fastening projections (11).

## Revendications

1. Disque ( 12 ) de frein pour une roue ( 4 ) d'un véhicule, comprenant
- des anneaux ( 1 ) de friction pouvant être disposés des deux côtés de la roue ( 4 ),
- et des moyens de liaison pour fixer les anneaux ( 1 ) de friction à la roue ( 4 ), qui sont conçus pour passer dans des trous ( 6 ) des anneaux ( 1 ) de friction et/ou dans des trous ( 15 ) de la roue ( 4 ) et qui ont des éléments ( 5 ) de serrage pour serrer les anneaux ( 1 ) de friction sur la roue ( 4 ), ainsi que des moyens ( 3 ) de centrage pour le centrage des anneaux ( 1 ) de friction sur la roue, les moyens ( 3 ) de centrage étant constitués sous la forme de broche et respectivement un élément ( 2 ) de guidage, qui est guidé mobile radialement sur l'anneau ( 1 ) de friction, est disposé à leurs deux extrémités libres, dans lequel
- les éléments ( 5 ) de serrage et les moyens ( 3 ) de centrage sont disposés séparément les uns des autres dans des trous ( 6, 15 ) différents,
**caractérisé en ce que**
le moyen de centrage en forme de broche est un manchon ( 3 ) de serrage creux.

2. Disque de frein pour une roue suivant la revendication 1,
**caractérisé en ce que**
l'élément ( 2 ) de guidage comprend l'une des extrémités du moyen de centrage en forme de broche.

3. Disque ( 12 ) de frein pour une roue suivant l'une des revendications 1 à 2,
**caractérisé en ce que**
l'élément de guidage est un patin ( 2 ).

4. Disque ( 12 ) de frein pour une roue suivant l'une des revendications précédentes,
**caractérisé en ce que**
l'élément ( 2 ) de guidage est guidé de manière mobile dans une rainure ( 7 ) s'étendant radialement et disposé sur l'anneau de friction.

5. Disque ( 12 ) de frein pour une roue suivant l'une des revendications précédentes,
**caractérisé en ce que**
l'élément de guidage est guidé de manière mobile radialement le long d'un patin disposé sur l'anneau de friction.

6. Disque ( 12 ) de frein pour une roue suivant l'une des revendications précédentes,
**caractérisé en ce que**
les éléments ( 5 ) de serrage et les moyens ( 3 ) de centrage sont disposés sur un arc d'un cercle.

7. Disque ( 12 ) de frein pour une roue suivant l'une des revendications précédentes,
**caractérisé en ce que**
au moins trois moyens ( 3 ) de centrage sont répartis uniformément le long d'un cercle.

8. Disque ( 12 ) de frein pour une roue suivant l'une des revendications précédentes,
**caractérisé en ce que**
sur l'anneau ( 1 ) de friction, sont disposées des saillies ( 11 ) de fixation, à travers lesquelles s'étendent des trous ( 6 ) de réception des éléments ( 5 ) de serrage, et il est disposé, à distance des saillies ( 11 ) de fixation, des saillies ( 13 ) de centrage, qui sont constituées pour le guidage mobile radialement des éléments ( 2 ) de guidage.
